# EUROPEAN PATENT APPLICATION

(11) **EP 2 924 676 A1**
(43) Date of publication of application: **30.09.2015**
(21) Application number: 14161464.4
(22) Date of filing: 25.03.2014
(51) Int. Cl.: G09B 19/06, G09B 5/06, G09B 19/04, H04R 25/00, G09B 21/00, G10L 13/033

(54) **Hearing-based adaptive training systems**

(71) Applicant: Oticon A/S, 2765 Smørum (DK)
(72) Inventor: Naylor, Graham, 2765 Smørum (DK); Pontoppidan, Niels Henrik, 2765 Smørum (DK); Laplante-Lèvesque, Ariane, 2765 Smørum (DK); Vatti, Marianna, 2765 Smørum (DK); Rønne, Filip Marchman, 2765 Smørum (DK); Poulsen, Henning Knak, 2765 Smørum (DK)
(74) Representative: Nielsen, Hans Jørgen Vind

(57) **Abstract**

A vocal training system (100) comprises a training-control unit (102), an evaluation unit (108) and a user-interface unit (106). The training-control unit (102) is configured to generate an initial training-stimulus signal associated with a pre-stored template-sound information. The evaluation unit (108) is configured to determine, from a training-activity, at least one error value of at least one error quantity indicative of a difference between the training-activity and template-sound information. The training-control unit (102) is further configured to receive the at least one error value and to generate an adaptive response to the training-activity signal in the form of a modified training-stimulus that is modified in comparison with the last-generated training-stimulus in dependence on the at least one error value, to provide the modified training-stimulus to the user-interface unit (106), and to control an iterative performance of the described cycle of generating a training-stimulus signal, receiving a training-activity signal and generating a modified training-stimulus signal, until existence of a predefined end-of-training condition is detected.

## Description

The present specification is concerned with hearing-based adaptive training systems.

WO 2005/125278A2 describes an at-home training system for training the use of a hearing communication device for hearing-impaired users with regard to the sound properties sensed by the user. The training system comprises a training-control unit in the form of a test administration computer, to which headphones, a keyboard, a database and a display are connected. Training is conducted using hearing test programs stored on the test administration computer and based on an initial assessment of a user's hearing profile. Specific sound patterns of words that are troublesome to the user according to his or her hearing profile are played repeatedly in sequence after changing the frequency and amplitude of the words, i.e., the user is trained on how the words will sound when wearing a hearing communication device. The user can fine-tune the frequency and amplitude of the words, and the modifications made by the user can be saved and used by a hearing care professional for fitting a hearing communication device to the user.

US 2011/0207094 A1 discloses a device for automated training of speech perception of a user wearing a hearing device. A playback apparatus presents a speech component acoustically. A display provides alternative response options for identifying the speech component, and receives a user response selected from the options. A control apparatus provides control of the playback apparatus and the interface apparatus such that there is automated modification of the acoustic presentation of the speech component.

US 2008/0124685 A1 describes a training system for training auditory skills of a hearing communication device user. Training programs of different embodiments aim at improving the ability of the user to discriminate between sounds, improving spatial hearing, or improving a temporal resolution of sounds by the user. Stored on the hearing communication device are various exercises. During operating of this training system, a sound sample is presented to the user. In a training step, the user indicates his or her response by pressing a button on the hearing communication device or on a remote control. The hearing communication device reports back visually or acoustically whether the response was right or wrong.

WO 2010/017156 describes a testing system for testing a raw hearing ability of a hearing-impaired person and for adapting operational parameters of a cochlea implant. An acoustical stimulus, which in embodiments takes the form of phonemes, actual words, phrases, sentences, or other language constructs in any language, is provided to the user. The user responds by making a sound signal representing what he heard. This output signal corresponding to each stimulus input signal is recorded using a microphone. In an alternative embodiment, the user types a textual representation of the sound heard into a keyboard. The output signal is stored and compared to the immediately preceding stimulus. Based on the user response, an algorithm, lookup table, or other procedure decides the user's strengths and weaknesses and stores this information in an internal perceptual model. Additionally, the algorithm suggests a value for a next test parameter to be tested for further optimizing the operational parameters of the cochlea implant, effectively choosing a next input sound signal to be presented to the user.

The present specification discloses training systems according to the present invention in two different groups of embodiments.

In the following, a first group of embodiments will be described.

A first group of embodiments of the training system are vocal training systems. Such vocal training systems comprise a training-control unit, an evaluation unit and a user-interface unit. The training-control unit is configured to generate a training-stimulus signal associated with a pre-stored template-sound information. The user-interface unit is configured to receive the training-stimulus signal and to generate from the training-stimulus signal and provide to the user at least one training stimulus for vocal training activity by a user of the system; the user-interface unit comprises an input unit (e.g. comprising a microphone), which is configured to generate a training-activity signal in the form of an electrical signal representing sound detected from a vocal training activity performed by the user in response to the training stimulus. The evaluation unit is configured to determine, from the training-activity signal, at least one error value of at least one error quantity indicative of a difference between the received training-activity signal and the template-sound information associated with the training-stimulus signal. The training-control unit is further configured to receive the at least one error value and to generate an adaptive response to the training activity signal in the form of a modified training-stimulus signal that is modified in comparison with the last-generated training-stimulus signal in dependence on the at least one error value, to provide the modified training-stimulus signal to the user-interface unit.

In an embodiment, the user-interface unit comprises at least one output transducer (e.g. a loudspeaker) and is configured to provide the initial and the modified training-stimulus signals to the user via the at least one output transducer (e.g. a loudspeaker).

In an embodiment, the user-interface unit comprises a visual display unit and is configured to provide a visual representation of the initial and the modified training-stimulus signals to the user via the visual display unit.

In an embodiment, the training-control unit is further configured to control an iterative performance of the described cycle of generating a training-stimulus signal, receiving training-activity signal and generating a modified training-stimulus signal. In an embodiment, the training-control unit is further configured to continue the iterative performance until existence of a predefined end-of-training condition is detected.

In an embodiment, the training-control unit comprises an adaptive filter. In an embodiment, the training-control unit is configured to generate the modified training-stimulus signal by applying an adaptive filter to the last-received training-activity signal, wherein the adaptive filter can be described by a filter function that depends on the at least one error value. The vocal training system provides a training facility for an individual training of the vocal skills of its user. A vocal training enabled by the hearing-based training system gives an adaptive feedback to the user by providing the modified training-stimulus signal that depends on at least one error value of at least one error quantity detected in the last vocal training activity in comparison with pre-stored template sound information. The hearing-based training system allows an adaptation of the training stimulus after each repetition of the training activity by the user. This way, the user of the hearing-based training system receives individual guidance in his training for enhancing his vocal skills.

The vocal training system will herein also be referred to in short as the training system.

The vocal training system forms an apparatus that can be adapted within a wide range of application cases representing different embodiments within the first group of embodiments of the training system.

A first application case of the vocal training system is the training of articulation or pronunciation skills. Articulation or pronunciation training with the hearing-based training system may for instance be performed for enhancing the pronunciation of sounds, words or phrases to be used in speaking a foreign language, a desired dialect of a language used by a particular group of the language's speakers, or in the native language of the user, the latter for instance in presence of a hearing impairment or of a speech disorder. It is widely observed that people, and especially adults, who learn foreign languages, rarely acquire an authentic pronunciation. Also, hearing impaired exhibit more difficulties in correctly pronouncing the words of their own or foreign languages. There are challenges in both hearing as well as reproducing the sounds of a phonetically different foreign language. Regarding hearing, foreign languages often may make use of distinctions that do not exist in one's native language, which makes sounds less distinguishable for foreigners. In terms of production, when imitating foreign phonemes, foreigners tend to produce phonemes which sound similar to their native language.

In one embodiment, the vocal training system comprises a hearing communication device adapted to be worn in or at an ear of the user. In an embodiment, an acoustoelectric input transducer of the hearing communication device forms the input transducer (e.g. microphone) of the user-interface unit. In an embodiment, the at least one output transducer comprises an output transducer (e.g. a loudspeaker) of the hearing communication device. Alternatively, the at least one output transducer comprises an output transducer (e.g. a loudspeaker) of a computer device.

In one embodiment suitable for a hearing-based training of pronunciation, the user-interface unit comprises an electro-acoustic output transducer of a hearing device or, in terms used in the art, a receiver of the hearing device. This embodiment allows providing the training stimulus to the user in the form of a sound, based on the initial and the modified training-stimulus signals that define or form respective electrical audio signal inputs to the receiver. The initial training-stimulus signal may for instance represent a sound, word or phrase that is presented to the user through the receiver in order to stimulate a vocal imitation attempt by the user.

Predefined sounds, words or phrases form examples of the template-sound information and are stored in the form of corresponding template-sound data in a template memory that, in operation, is in functional connection with hearing-based training system. The template memory is preferably configured to provide read access for the training-control unit, in some embodiments also for the user interface. The template memory is in some embodiments associated with the training system as an internal unit. In other embodiments, it forms an external unit that can be connected to the training system via a wired or wireless interface. In some embodiments, the template memory is configured to allow an addition or rewriting of template-sound data for updating or replacement of a training topic of an individual vocal training exercise, or of a vocal training lesson, or of a complete vocal training program.

In such embodiments, the training-control unit is preferably configured to generate the modified training-stimulus signal by applying an adaptive filter to the last-received training-activity signal. The adaptive filter can be described by a filter function that depends on the at least one error value. Thus, in this embodiment, the modified training-stimulus signal is derived from the received training-activity signal and therefore from the vocal training activity performed by the user. It has been found that a training stimulus to the user in the form of an acoustical feedback based on the user's own vocal activity, as enabled by this embodiment, is particularly effective in generating an adaptive response by the user that reduces an initial pronunciation error (as determined by the at least one error value) in comparison with the template sound information. In other words, vocal training based the present embodiment of the training system is very closely adapted to the individual user and turns out to be quite effective in enhancing the user's progress of learning and thus the success of his training.

The evaluation unit is in some embodiments configured to perform, preferably in real-time, but not necessarily in real-time, a time-resolved spectral analysis of the sound detected during a vocal training activity, in particular of the training-activity signal. Performing the spectral analysis comprises ascertaining a measure of the sound amplitude as a function of time at selected sound frequencies. In an embodiment, the evaluation unit is configured to update the determination of the at least one error value in real time.

In preferred embodiments, the evaluation unit is configured to determine from the training-activity signal an estimate of at least one of the following quantities: Sound pitch, sound amplitude, sound duration, and formant frequencies. Sound pitch refers to a pitch of the voice of the user during his or her vocal training activity and can be determined based on a spectral analysis of the training-activity signal. As the pronunciation typically varies with time, the pitch is in one embodiment determined as a function of time over the time span of the vocal training activity by the user. A simple measure of the pitch of a voice is for instance a frequency of one or more selected constituents of the training-activity signal generated from the vocal training activity. Sound amplitude refers to the volume of the voice of the user during the vocal training activity. It may also be determined as a function of time. Sound duration refers to the duration of a sound entity that forms a constituent of the vocal training activity. An example of a sound entity is a given vowel, such as the vowels of a given language represented by the letters "a", "e", "i", "o", "u", or a given consonant, such as consonants of a given language represented by the letters "k", "b", "sharp s", "soft s". Such defined vocal sounds can be identified by suitable analysis of the training activity signal, and a duration of pronunciation of such sounds can be determined. Formant frequencies are spectral peaks of the sound spectrum of the voice and thus form characteristic spectral features observable by a spectrally resolved measurement of the sound amplitude during the detection of a pronunciation of certain sounds, such as vowels or consonants.

Preferably, the evaluation unit is configured to determine the at least one error value from the at least one determined estimate of the mentioned quantity or quantities and from a respective associated template value comprised by the template-sound information. This implies that the memory stores all the template-sound information that is required to determine the error value. Generally, the stored template-sound information is thus provided in correspondence to the evaluation functionality of the evaluation unit used in operation of the training system.

In preferred embodiments, the training-control unit comprises a filter unit, which is configured to generate, preferably also in real-time, the modified training-stimulus signal by modifying the at least one of the quantities, for which an estimate is determined by the evaluation unit from the training-activity signal, in comparison with the respective determined estimate. This filtering of the last-received training-activity signal introduces a modification of the vocal training activity performed by the user, which is fed back to the user as a next training stimulus to stimulate, as a response, an adaptation in his or her vocal training activity that reduces the pronunciation error.

The user's adaptation towards a pronunciation in close proximity to the template sound information has been found to be particularly successful in embodiments in which the filter unit is configured to modify the at least one of the determined quantities, such as formant frequencies, pitch, loudness, in comparison with the respective determined estimate by determining a filtered value of the quantity that has a larger difference from the respective associated template value or values than the respective ascertained estimate. In these embodiments, the acoustical feedback provided to the user in the form of the filtered version of her pronunciation has an even increased pronunciation error in comparison with that of the user's vocal training activity. Even though this may seem counterintuitive, it has been found that this type of feedback, that can be described as exaggerating, the user's pronunciation error leads to a stronger adaptive response by the user in reducing the pronunciation error. The users modify their vocal training activity in order to compensate for changes imposed on the sound of their own voice. The speech aspects, which are seen to be influenced by auditory feedback, are the loudness, duration, pitch and formant frequencies. For formant frequencies in particular, it has been shown that talkers spontaneously compensate for real-time formant-shifts by altering formant production in a manner opposite to the perturbation.

As an alternative or, preferably, as an addition to an acoustical feedback, a visual feedback is generated in response to the user's training activity in some embodiments. In these embodiments, the training-control unit is configured to generate from the at least one determined error value visual-error-representation data suitable for optical presentation to the user via an external display. Visual feedback involving information on the error value determined by the evaluation unit allows the user assessing the quality of his or her articulation, for instance for vowels. Visual feedback is preferably provided in embodiments forming a training system for hearing impaired persons and may in such embodiments form the only source of feedback in using the training system, depending on the severity of the hearing impairment.

In an embodiment, the vocal training system comprises a computer device. In an embodiment, the computer device comprises one or more of the input transducer (e.g. a microphone), the at least one output transducer (e.g. a loudspeaker), and the visual display unit.

The user-interface unit of such embodiments additionally comprises a display device. The display device is in exemplary embodiments a separate display and connectable with the training-control unit via a wired or wireless connection. In other embodiments, the display device is integrated with the training-control unit, and preferably also with the evaluation unit, into a single device. In some embodiments, the training-control unit, and preferably also the evaluation unit, is implemented as an integral part of an executable training-control software product, which is stored in a memory of a computer device and to be executed by a programmable processor of the computer device. The computer device can for instance take the form of a desktop computer, a laptop computer, a tablet computer, or a handheld computer, such as a dedicated training device or a smartphone. Such embodiments allow the users performing the training with their personal computer equipment. The training can be performed at any suitable moment, for instance using the training-control software on a smartphone, with an input transducer (e.g. a microphone), an output transducer (e.g. a loudspeaker) and a display of the smartphone forming parts of the user-interface unit.

Existence of the predefined end-of-training condition can be detected automatically by the training-control unit in some embodiments. For instance, in one embodiment, the training-control unit is configured to check fulfillment of a threshold criterion by the at least one error value. As an example, the end-of-training condition is reached in one implementation by the absolute error value falling below a predetermined absolute threshold value. In other embodiments, the training-control unit is configured to detect the end-of-training condition by determining the presence of a predefined vocal or manual user input signal, or by detecting that a preset training time span has lapsed.

Different embodiments of the hearing-based training system have different device configurations.

In some embodiments, the hearing device is provided in the form of headphones or earphones. In a variant, the hearing device of the training system is provided together with the input transducer (e.g. a microphone) of its user-interface in the form of a headset.

In some embodiments, the training-control unit and the evaluation unit are implemented in the form of a training-control device, e.g. a computer device, that is external to the hearing device, and the hearing device and the training-control device comprise respective communication units for mutual, preferably wireless, exchange of signals and data, in particular of the training-stimulus signals and the training-activity signals. The training-control device and/or the evaluation unit are in some embodiments implemented by executable code, which is stored in and to be executed by a programmable processor of a computation device, examples of which include, but are not limited to, mobile phones, smartphones, smartwatches, glasses comprising a computer, tablet computers, personal computers, laptops, notebooks, phablets, etc.

In other embodiments, the hearing device is provided in the form of a hearing communication device, i.e., for use by hearing-impaired users. Typically, such hearing communication devices are to be worn in or at an ear of the user. The input transducer (e.g. a microphone) of the user-interface unit is in these embodiments preferably formed by an input transducer of the hearing communication device. However, an alternative or additional input transducer, e.g. a microphone, which is external to the hearing communication device, may be used in some embodiments. The hearing communication device of these embodiments preferably further comprises a control unit, which is configured to control operation of the hearing device in a normal-operation mode, i.e., as a hearing communication device for supporting the hearing of the user and to switch between the normal-operation mode and a training mode by activating or de-activating the training-control unit.

In one form of such embodiments, the training functionality provided by the present training system is implemented as an operational mode of the hearing communication device that can be switched off or on by user input. In some embodiments, the training-control unit forms an integral part of the control unit of the hearing-communication device that is also configured to control operation of the hearing-communication device in the normal-operation mode.

In some embodiments that make use of a hearing communication device, further training functionality is included for improving the user's capability to make the best possible use of his hearing communication device according to his individual hearing ability and use skill. Such embodiments widen the scope of the training functionality of the hearing communication device of the first group of embodiments. In these embodiments, the training-control unit is further configured to
- control operation of the hearing communication device in executing a use-training program directed at training the user in using the hearing communication device,
- determine and provide at its output the initial training-stimulus signal in the form of an initial use-training-stimulus signal for stimulating a use-training activity, which is associated with the initial use-training-stimulus signal and to be performed by the user;
- in response to receiving the training-activity signal in the form of a use-training activity signal, which is indicative of a use-training activity performed by the user, determine the at least one error value from the detected use-training activity signal and at least one pre-stored expected use-training activity signal,
- in dependence on the at least one error value, determine and provide at its output a next use-training-stimulus signal to be provided to the user.

The user-interface unit of these embodiments is preferably additionally configured to receive the use-training-stimulus signals and to generate and provide to the user corresponding use-training stimuli.

In combination with the vocal training functionality, these embodiments allow replacing written manuals that require a tiring study by the user for an introduction to the functionality of the training system. For use-training to be cost-efficient, time required by a Hearing Care Professional (HCP) must be minimized. Therefore, the training is made available for the user to complete on his or her own.

Such use-training in particular provides a valuable supplement in embodiments comprising hearing device in the form of a hearing communication device for hearing-impaired users, e.g., a Hearing Aid (HA), a Cochlear Implant (CI), or a Bone Anchored Hearing Instrument (BAHI). In comparison with other types of hearing devices, like headsets, which are designed for users with no hearing impairment, hearing communication devices are for hearing-impaired users, and typically are complex in their use and control of operation to a degree that requires users to get acquainted to their use by special training.

In some of these embodiments, the training-control unit is thus configured to execute a pre-stored use-training program that controls operation of the hearing communication device in delivering auditory perceptual or cognitive training through the hearing communication device.

The use-training program is in one embodiment stored in a program memory of the hearing communication device of the training system. This embodiment overcomes previous obstacles to success with such training, which included that special equipment in the user's home or, alternatively, equipment easily accessible by the user was required. The trainee does not have to be in any specific location to follow the training regime. Furthermore, integration of the training procedure with the general use of the hearing communication device facilitates acceptance and compliance by the user.

Use training may be directed at different aspects of use in different embodiments. Some exemplary application cases of the present embodiment will be described next. An application case may be implemented alone or in combination with any of the other application cases.

In one embodiment forming such an application case, the use training is directed at training the cognitive performance of the user by providing a use-training program that controls operation of the hearing communication device in executing cognitive exercises involving auditory stimuli provided via the hearing communication device.

In another embodiment, the use training is directed at training the auditory perception skills of the user by providing a use-training program that controls operation of the hearing communication device in executing auditory exercises involving auditory stimuli provided via the hearing communication device. The use-training program incorporates for instance training exercises with new signal processing algorithms. In one implementation of this embodiment, the training system allows modifying the settings of the given signal processing algorithm. In particular, the hearing-communication device of this implementation comprises a programmable signal processor, which is configured to execute at least one adaptable signal processing algorithm implemented in the form of a stored code that is executable by the signal processor and, using adaptable signal-processing parameters in executing the signal processing algorithm to generate electrical signals that are derived from input sound received by an acoustoelectric input transducer of the hearing communication device and that are to be used for generating output sound to be provided to the user via at least one receiver of the hearing communication device. The use-training program is directed at training the user in using the signal-processing algorithm. The training-control unit of this implementation, in executing the use-training program, is configured to adapt the signal-processing parameters in dependence on the use-training activity signal received.

An example for an advantageous use of this implementation is an introduction of a signal processing in the form of frequency lowering for a child using a hearing communication device. Here, the use-training can prepare the child user, accompanied by an adaptation of the parameters of the signal processing in the course of the use training in response to the use-training activities performed by the child user.

Furthermore, in a variant of this implementation, the training-control unit is configured to determine, based on the determined comparison result, fulfilling a predetermined degree of similarity between the detected use-training activity signal and the at least one expected use-training activity signal, and provide an output indicative that the user is ready to use the specific signal-processing algorithm in actual listening situations. The similarity can be defined on the basis of an error value of the detected use-training activity signal in comparison with the at least one expected use-training activity signal.

In yet another embodiment, the use training is directed at training the control of operation of the hearing communication device by the user by providing a use-training program that trains control of the operation of the hearing communication device by the user via executing manual-use-training exercises, preferably, but not necessarily involving auditory stimuli provided via the hearing communication device.

It is well known that hearing communication device users often only retain a minority of the information provided to them by the hearing care professional, including information about how and when to operate non-default modes of the hearing communication device. Such non-default modes are typically implemented in order to provide optimal benefit for the user in distinct classes of listening situations. If the user does not activate the modes appropriately, potential benefits are missed. Furthermore, due to size constraints, hearing communication devices typically feature very few buttons, and to accommodate more advanced operation, their functions may depend on the current state or on the duration of the button press, or on both. Different functionality in a single physical button complicates the operation for the user. Furthermore, sitting down with the user to monitor how he or she handles the hearing communication device and helping improving the use pattern is time consuming for a hearing care professional. The present embodiment thus implements training in the mastery of the functions of the hearing communication device.

For instance, the training-control unit is in some embodiments configured to give a verbal prompt via the user-interface unit, for instance the receiver of the hearing communication device, suggesting that the user changes the mode of operation of the hearing communication device, and how to do so. The monitoring unit of such embodiments is configured to register whether the suggestion was followed or whether the user's training activity in response to this initial stimulus was correct or not, provide appropriate feedback, and modify the further course of training as necessary. E.g., upon detecting that the user no longer makes mistakes in certain use patterns, suggestions for a corresponding training program may be ceased.

Some embodiments additionally comprise a monitoring unit, which is configured, in the normal-operation mode of the hearing communication device, to receive input signals from the acoustoelectric input transducer or from manual-input units of the hearing communication device to evaluate the input signals for detecting a correspondence with at least one predefined input-signal pattern that is associated with a pre-stored use-training program and to provide a monitor-output signal indicative of an identified use-training program. In these embodiments, the training-control unit is preferably configured to receive the monitor-output signal and to provide, immediately in response to receiving the monitor-output signal or after lapse of a delay time, a suggestion-signal for output via the user-interface unit, the suggestion signal providing a stimulus for the user to start the identified use-training program. The monitoring unit thus allows identifying and suggesting training programs in accordance with the needs of the user as determined during normal operation of the hearing communication device.

In one of these embodiments, an auditory situation, in which the user employs the hearing communication device, modifies the use-training program. For instance, a selection of a suitable training program is performed after evaluating input signals, which are generated by the acoustoelectric input transducer and which bear information on the current auditory situation. Based on the pre-stored input signal patterns, the monitoring unit will then determine at least one of these pre-stored input-signal patterns, which fulfils a predefined correspondence criterion with the detected input signals. For example, if the monitoring unit detects that the trainee is listening to multiple talkers with similar pitches, a pitch-training program is suggested. Listening difficulties for the user may also arise from certain acoustical backgrounds, which in some embodiments can be identified by the monitoring unit by detecting respective characteristic signal patterns observable in the input signals provided by the acoustoelectric input transducer.

The suggestion of a use-training is in one variant provided only upon detecting a certain frequency of occurrence of a given auditory situation. In another variant, the frequency of suggesting a particular training program depends on a frequency of occurrence of a given auditory situation. For instance, a higher frequency of an auditory situation with a spatial separation of talkers can increase an amount (duration and/or frequency) of spatial training suggested by the training-control unit.

In another embodiment, the monitoring unit is further configured, in the normal-operation mode of the hearing communication device, to start operating in response to receiving a predefined trigger user-input indicative of a desire for use-training with respect to a current acoustical situation. Preferably, the monitoring unit is configured to receive the predefined trigger user-input and start the evaluation of the input signals received from the acoustoelectric input transducer in response to receiving the trigger user-input.

It is not only an acoustic input received via the acoustoelectric input transducer that may trigger the monitoring or trigger or influence the use-training. In some embodiments, the monitoring unit alternatively or additionally observes the user's manual input pattern during normal operation of the hearing communication device. A detection of such manual input patterns preferably triggers the same evaluation by the monitoring unit as in the above case where the user explicitly identifies a difficult auditory situation. In some embodiments, certain manual input patterns influence the training program to be selected. For example, upon detection of a frequently repeated change of volume of the receiver by the user (volume up or volume down), a use-training program is preferably selected that trains the user in finding a suitable parameter setting of the hearing communication device that best fits the user's requirements. Frequent volume up/down adjustments by the user are only one exemplary use-pattern which is indicative of listening problems.

In some embodiments, any adjustment of the training or of operational parameters of the hearing communication device set or modified in the course of the training is stored in a protocol file and can therefore be subject to review by a hearing care professional. The protocol file can alternatively or additionally store logging data about the training for use by the hearing care professional in subsequent counseling and fine-tuning of the functions of the hearing communication device.

In other embodiments, the monitoring unit comprises a brain-computer interface sensor, such as a brain-activity sensor, for instance in the form of an electroencephalogram (EEG) sensor, and is configured to evaluate a brain response to training-stimuli provided via the user interface unit. This way, an indicator of training performance can be measured. As an application example, in attention training, executing the training program may comprise informing the user about a predefined target sound that he should attend to, subsequently presenting a number of auditory streams to the user, and finally measuring if the user's attention matches the predefined target. In another embodiment, the monitoring unit is configured to measure, using the brain-computer interface sensor, the magnitude to which different listening situations impact user's fatigue, and use this, preferably under additional consideration of a detected occurrence rate of the listening situation, to modify the training program.

All embodiments of the vocal training system described heretofore belong to the first group of embodiments.

This ends the description of the first group of embodiments.

In the following, a second group of embodiments of a training system will be described.

The second group of embodiments, which forms an independent invention that does not require the previously described features of the vocal training system of the first group of embodiments, comprises embodiments of a training system for training use of a hearing communication device to be worn in or at an ear of a user. These embodiments comprise a user-interface unit including an acoustoelectric input transducer of the hearing communication device, and a control unit of the hearing communication device, which is configured to control operation of the hearing device in a normal-operation mode as a hearing communication device and to switch between the normal-operation mode and a training mode by activating or de-activating a training-control unit. The training-control unit is configured to
- control operation of the hearing communication device in executing a use-training program directed at training the user in using the hearing communication device,
- determine and provide at its output the initial training-stimulus signal in the form of an initial use-training-stimulus signal for stimulating a use-training activity, which is associated with the initial use-training-stimulus signal and to be performed by the user;
- in response to receiving the training-activity signal in the form of a use-training activity signal, which is indicative of a use-training activity performed by the user, determine the at least one error value from the detected use-training activity signal and at least one pre-stored expected use-training activity signal,
- in dependence on the at least one error value, determine and provide at its output a next use-training-stimulus signal to be provided to the user.

Such use-training is valuable in particular for hearing communication devices for hearing-impaired users, e.g., a Hearing Aid (HA), a Cochlear Implant (CI), or a Bone Anchored Hearing Instrument (BAHI). In comparison with other types of hearing devices, like headsets, which are designed for users with no hearing impairment, hearing communication devices are for hearing-impaired users, and typically are complex in their use and control of operation, to a degree that requires users to get acquainted to their use by special training.

It is well known that hearing communication device users often only retain a minority of the information provided to them by the hearing care professional, including information about how and when to operate non-default modes of the hearing communication device. Such non-default modes are typically implemented in order to provide optimal benefit for the user in distinct classes of listening situations. If the user does not activate the modes appropriately, potential benefits are missed. Furthermore, due to size constraints, hearing communication devices typically feature very few buttons, and to accommodate more advanced operation, their functions may depend on the current state or on the duration of the button press, or on both. Different functionality in a single physical button complicates the operation for the user. Furthermore, sitting down with the user to monitor how he or she handles the hearing communication device and helping improving the use pattern is time consuming for a hearing care professional. The present embodiment thus implements training in the mastery of the functions of the hearing communication device.

Preferred embodiments of the training system of the second group of embodiments comprise a user-interface unit, which is additionally configured to receive the use-training-stimulus signals and to generate and provide to the user corresponding use-training stimuli.

These embodiments allow replacing written manuals that require a tiring study by the user for an introduction to the functionality of the training system. For use-training to be cost-efficient, time required by a Hearing Care Professional (HCP) must be minimized. Therefore, the training is made available for the user to complete on his or her own.

In some of these embodiments, the training-control unit is thus configured to execute a pre-stored use-training program that controls operation of the hearing communication device in delivering auditory perceptual or cognitive training through the hearing communication device.

The use-training program is in one embodiment stored in a program memory of the hearing communication device of the training system. This embodiment overcomes previous obstacles to success with such training, which included that special equipment in the user's home or, alternatively, equipment easily accessible by the user was required. The trainee does not have to be in any specific location to follow the training regime. Furthermore, integration of the training procedure with the general use of the hearing communication device facilitates acceptance and compliance by the user.

Use training may be directed at different aspects of use in different embodiments. Some exemplary application cases of the present embodiment will be described next. An application case may be implemented alone or in combination with any of the other application cases.

In one embodiment forming such an application case, the use training is directed at training the cognitive performance of the user by providing a use-training program that controls operation of the hearing communication device in executing cognitive exercises involving auditory stimuli provided via the hearing communication device.

In another embodiment, the use training is directed at training the auditory perception skills of the user by providing a use-training program that controls operation of the hearing communication device in executing auditory exercises involving auditory stimuli provided via the hearing communication device. The use-training program incorporates for instance training exercises with new signal processing algorithms. In one implementation of this embodiment, the training system allows modifying the settings of the given signal processing algorithm. In particular, the hearing-communication device of this implementation comprises a programmable signal processor, which is configured to execute at least one adaptable signal processing algorithm implemented in the form of a stored code that is executable by the signal processor and, using adaptable signal-processing parameters in executing the signal processing algorithm, to generate electrical signals that are derived from input sound received by an acoustoelectric input transducer of the hearing communication device and that are to be used for generating output sound to be provided to the user via at least one receiver of the hearing communication device. The use-training program is directed at training the user in using the signal-processing algorithm. The training-control unit of this implementation, in executing the use-training program, is configured to adapt the signal-processing parameters in dependence on the use-training activity signal received.

An example for an advantageous use of this implementation is an introduction of a signal processing in the form of frequency lowering for a child using a hearing communication device. Here, the use-training can prepare the child user, accompanied by an adaptation of the parameters of the signal processing in the course of the use training in response to the use-training activities performed by the child user.

Furthermore, in a variant of this implementation, the training-control unit is configured to determine, based on the determined comparison result fulfilling a predetermined degree of similarity between the detected use-training activity signal and the at least one expected use-training activity signal, and provide an output indicative that the user is ready to use the specific signal-processing algorithm in actual listening situations. The similarity can be defined on the basis of an error value of the detected use-training activity signal in comparison with the at least one expected use-training activity signal.

In yet another embodiment, the use training is directed at training the control of operation of the hearing communication device by the user by providing a use-training program that trains control of the operation of the hearing communication device by the user via executing manual-use-training exercises, preferably but not necessarily involving auditory stimuli provided via the hearing communication device. It is well-known that hearing communication device users often only retain a minority of the information provided to them by the hearing care professional, including information about how and when to operate non-default modes of the hearing communication device. Such non-default modes are typically implemented in order to provide optimal benefit for the user in distinct classes of listening situations. If the user does not activate the modes appropriately, potential benefits are missed. The present embodiment thus implements training in the mastery of the functions of the hearing communication device.

For instance, the training-control unit is in some embodiments configured to give a verbal prompt via the user-interface unit, for instance the receiver of the hearing communication device, suggesting that the user changes the mode of operation of the hearing communication device, and how to do so. The monitoring unit of such embodiments is configured to register whether the suggestion was followed, or whether the user's training activity in response to this initial stimulus was correct or not, provide appropriate feedback, and modify the further course of training as necessary. E.g., upon detecting that the user no longer makes mistakes in certain use patterns, suggestions for a corresponding training program may be ceased.

Some embodiments additionally comprise a monitoring unit, which is configured, in the normal-operation mode of the hearing communication device, to receive input signals from the acoustoelectric input transducer or from manual-input units of the hearing communication device, to evaluate the input signals for detecting a correspondence with at least one predefined input-signal pattern that is associated with a pre-stored use-training program, and to provide a monitor-output signal indicative of an identified use-training program. In these embodiments, the training-control unit is preferably configured to receive the monitor-output signal and to provide, immediately in response to receiving the monitor-output signal or after lapse of a delay time, a suggestion-signal for output via the user-interface unit, the suggestion signal providing a stimulus for the user to start the identified use-training program. The monitoring unit thus allows identifying and suggesting training programs in accordance with the needs of the user as determined during normal operation of the hearing communication device.

In one of these embodiments, an auditory situation, in which the user employs the hearing communication device, modifies the use-training program. For instance, a selection of a suitable training program is performed after evaluating input signals, which are generated by the acoustoelectric input transducer and which bear information on the current auditory situation. Based on the pre-stored input signal patterns, the monitoring unit will then determine at least one of these pre-stored input-signal patterns, which fulfils a predefined correspondence criterion with the detected input signals. For example, if the monitoring unit detects that the trainee is listening to multiple talkers with similar pitches, a pitch-training program is suggested. Listening difficulties for the user may also arise from certain acoustical backgrounds, which in some embodiments can be identified by the monitoring unit by detecting respective characteristic signal patterns observable in the input signals provided by the acoustoelectric input transducer.

The suggestion of a use-training is, in one variant, provided only upon detecting a certain frequency of occurrence of a given auditory situation. In another variant, the frequency of suggesting a particular training program depends on a frequency of occurrence of a given auditory situation. For instance, a higher frequency of an auditory situation with a spatial separation of talkers can increase an amount (duration and/or frequency) of spatial training suggested by the training-control unit.

In another embodiment, the monitoring unit is further configured, in the normal-operation mode of the hearing communication device, to start operating in response to receiving a predefined trigger user-input indicative of a desire for use-training with respect to a current acoustical situation. Preferably, the monitoring unit is configured to receive the predefined trigger user-input and start the evaluation of the input signals received from the acoustoelectric input transducer in response to receiving the trigger user-input.

It is not only an acoustic input received via the acoustoelectric input transducer that may trigger the monitoring or trigger or influence the use-training. In some embodiments, the monitoring unit alternatively or additionally observes the user's manual input pattern during normal operation of the hearing communication device. A detection of such manual input patterns preferably triggers the same evaluation by the monitoring unit as in the above case where the user explicitly identifies a difficult auditory situation. In some embodiments, certain manual input patterns influence the training program to be selected. For example, upon detection of a frequently repeated change of volume of the receiver by the user (volume up or volume down), a use-training program is preferably selected that trains the user in finding a suitable parameter setting of the hearing communication device that best fits the user's requirements. Frequent volume up/down adjustments by the user are only one exemplary use-pattern which is indicative of listening problems.

In some embodiments, any adjustment of the training or of operational parameters of the hearing communication device set or modified in the course of the training is stored in a protocol file and can therefore be subject to review by a hearing care professional. The protocol file can alternatively or additionally store logging data about the training for use by the hearing care professional in subsequent counseling and fine-tuning of the functions of the hearing communication device.

In other embodiments, the monitoring unit comprises a brain-computer interface sensor, such as a brain-activity sensor, for instance in the form of an electroencephalogram (EEG) sensor, and is configured to evaluate a brain response to training-stimuli provided via the user interface unit. This way, an indicator of training performance can be measured. As an application example, in attention training, executing the training program may comprise informing the user about a predefined target sound that he should attend to, subsequently presenting a number of auditory streams to the user, and finally measuring if the user's attention matches the predefined target. In another embodiment, the monitoring unit is configured to measure, using the brain-computer interface sensor, the magnitude to which different listening situations impact user's fatigue, and use this, preferably under additional consideration of a detected occurrence rate of the listening situation, to modify the training program.

In preferred embodiments, the training-control unit and the evaluation unit are implemented in the form of a training-control device that is external to the hearing device, and the hearing communication device and the training-control device comprise respective communication units for mutual, preferably wireless, exchange of signals and data, in particular of the training-stimulus signals and the training-activity signals. The training-control device and/or the evaluation unit are in some embodiments implemented by executable code, which is stored in and to be executed by a programmable processor of a computation device, examples of which include but are not limited to mobile phones, smartphones, smartwatches, glasses comprising a computer, tablet computers, personal computers, laptops, notebooks, phablets, etc.

All embodiments of the training system for training use of a hearing communication device described after the end of the description of the first group of embodiments and to this point belong to the second group of embodiments.

In the following, further embodiments comprised by the second group of embodiments are disclosed.

In one embodiment, the training-control unit is configured to generate an initial training-stimulus signal associated with a pre-stored template-sound information.

In another embodiment, the user-interface unit is configured to receive the training-stimulus signal and to generate from the training-stimulus signal and provide to the user at least one training stimulus for training activity by the user.

In another embodiment, the user-interface unit comprises a microphone, which is configured to generate a training-activity signal in the form of an electrical signal representing sound detected from a vocal training activity performed by the user in response to the training stimulus.

In another embodiment, the evaluation unit is configured to determine from the training-activity signal at least one error value of at least one error quantity indicative of a difference between the received training-activity signal and the template-sound information. The training-control unit is configured to receive the at least one error value and to generate an adaptive response to the training activity signal in the form of a modified training-stimulus signal that is modified in comparison with the last-generated training stimulus signal in dependence on the at least one error value, to provide the modified training-stimulus signal to the user-interface unit, and to control an iterative performance of the described cycle of generating a training-stimulus signal, receiving training-activity signal and generating a modified training-stimulus signal until existence of a predefined end-of-training condition is detected.

In another embodiment, the user-interface unit comprises a receiver of a hearing device and is configured to provide initial and modified training-stimulus signals to the user via the receiver, and the training-control unit is configured to generate the modified training-stimulus signal by applying an adaptive filter to the last-received training-activity signal.

In another embodiment, the adaptive filter can be described by a filter function that depends on the at least one error value.

In another embodiment, the evaluation unit is configured to update the determination of the at least one error value in real time.

In another embodiment, the evaluation unit is configured to determine from the training-activity signal an estimate of at least one of the following quantities: Sound pitch, sound amplitude, sound duration, and formant frequencies. In an embodiment, the evaluation unit is configured to determine the at least one error value from the at least one determined estimate and from a respective associated template value comprised by the template-sound information. In an embodiment, the training-control unit comprises a filter unit, which is configured to generate the modified training-stimulus signal by modifying the at least one of the determined quantities in comparison with the respective determined estimate.

In another embodiment, the filter unit is configured to modify the at least one of the determined quantities in comparison with the respective determined estimate by determining a filtered value of the quantity that has a larger difference from the respective associated template value than the respective determined estimate.

In another embodiment, the training-control unit is configured to generate from the at least one determined error value visual-error-representation data suitable for optical presentation to the user via an external display.

In another embodiment, the training-control unit is configured to generate the visual-error-representation data in the form of a real-time display indicative of the at least one error value as a function of time during an ongoing vocal training activity.

This ends the description of the second group of embodiments.

A third group of embodiments relates to gaming. In an embodiment, the vocal training system is configured to aid a user in perfecting language skills, e.g. English or Chinese. A vocal training system according to the present disclosure may be configured to provide a meaningful machine feedback on pronunciation of a syllable or word or sentence. In a preferred embodiment, the vocal training system is configured to integrate vocal training and gaming facilities, e.g. via a network, such as a local network and/or the Internet. Such networking options may e.g. provide competition among peers, and/or the collection of gaming points. In an embodiment, the vocal training system is adapted to provide that a multitude of users can compete amongst each other in a game that includes (but is not necessarily exclusively based on) language skills, e.g. in closed groups, possibly under supervision of a teacher.

A system according to the third group of embodiments provides an environment for improving language skills in a fun, challenging and exciting (and possibly competitive) way. Thereby language skills can be trained any time when the user wants (not dependent on a predefined time schedule or a teacher being present).

In an aspect, a training system adapted to provide training in using a hearing aid of a specific kind. In an embodiment, the training system is configured to learn a user how to best operate a specific type of hearing device (HAₛₚ). In an embodiment, the training system is configured to allow the formation of a community (the HAₛₚ-community) between users of the same type of hearing device (HAₛₚ). The training system may be specifically configured to aid a user to enter the HAₛₚ-community. The individuals of the community may share experiences and help each other with particular challenges.

Further embodiments of both the first and second and third group of embodiments will be described in the following with reference to the enclosed drawings. In the drawings:
- Fig. 1: is a schematic block diagram of an embodiment of a vocal training system;
- Fig. 2: is a schematic block diagram of another embodiment of a vocal training system;
- Fig. 3: is a schematic diagram of an evaluation unit and a training-control unit that can be used in the embodiments of Figs. 1 or 2;
- Fig. 4: is a schematic block diagram of another embodiment of a vocal training system;
- Fig. 5: is an illustration of a display providing visual feedback, a vocal training system according to an embodiment;
- Fig. 6: is a schematic block diagram of a training system with an additional or alternative use-training feature;
- Fig. 7: is an illustrative example of a visual feedback provided during a use-training program performed by the embodiment of Fig. 6;
- Fig. 8: is a schematic example of an integrated vocal training and gaming system,; and
- Fig. 9: is a schematic example of a training system.

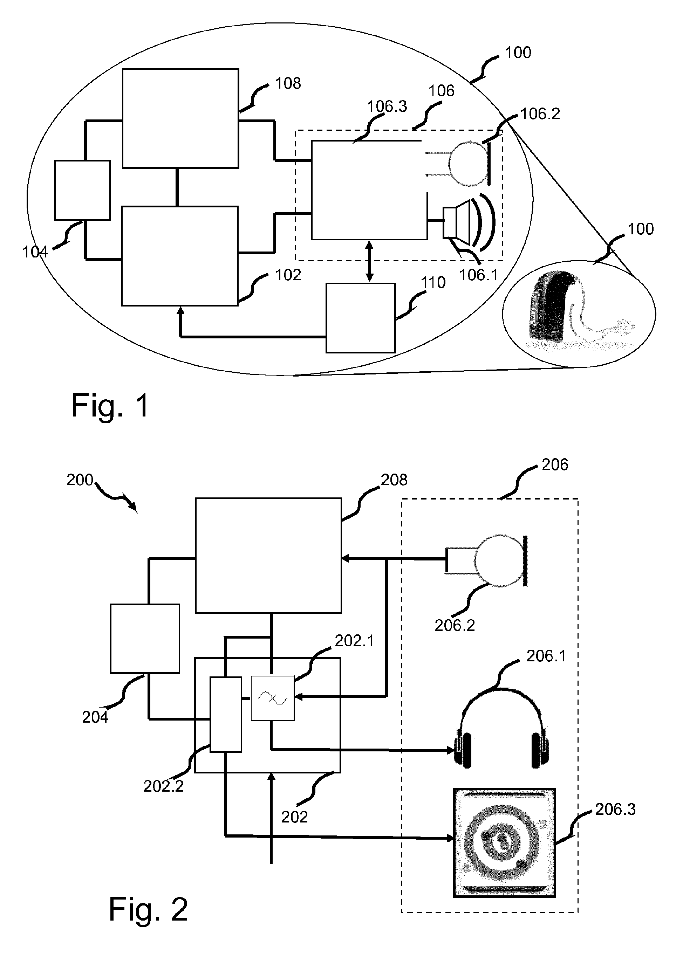

Fig. 1 is a schematic block diagram of an embodiment of a vocal training system. The vocal training system is, in the present exemplary embodiment, implemented in integrated form in a hearing communication device 100, in particular a hearing aid to be worn by a hearing-impaired person. Thus, the functionality of a hearing aid and of a vocal training system are in the present embodiment incorporated in a single hearing communication device, largely using identical device components for both functionalities, as will be described below in more detail. In the following, therefore, the vocal training system of the present embodiment will be referred to using the same reference label 100 as for the hearing communication device.

The structural elements of the present vocal training system 100 are shown in the block diagram of Fig. 1. A training-control unit 102 is connected with a template memory 104. The template memory 104 stores template-sound data to be provided to a user of the training system 100 via a user-interface unit 106. The user-interface unit 106 of the present embodiment comprises a receiver 106.1, a microphone 106.2 and a user-interface control 106.3. The template-sound data are to be provided to the user via the receiver 106.1 under control of the training-control unit 102, as will be described in more detail further below. The training-control unit receives control input from a control unit 110 of the hearing aid, as indicated by an arrow directed towards the training-control unit from below.

The vocal training system 100 further comprises an evaluation unit 108, which has an input connected with the user-interface unit 106 and with the template memory 104. An output of the evaluation unit 108 is connected with the training-control unit 102. The training-control unit 102 is configured to generate, in operation of the vocal training system 100, an initial training-stimulus signal associated with a template-sound information stored in the template memory 104. The user-interface unit 106 is configured to receive the training-stimulus signal in the user-interface control unit 106.3 and provide an acoustical training stimulus for a vocal training activity by the user via the receiver 106.1. The training-stimulus may also be delivered to the user via other channels, as will be described further below.

Furthermore, a control unit 110 is provided, which controls operation of the hearing communication device 100 in a normal-mode operation of the hearing communication device as a hearing aid. The control unit is shown as a single functional block for simplicity. It performs a wealth of functions under normal-mode operation, as is well-known in the art, and will therefore not be described here in detail. For the purpose of the present specification, it is noteworthy that the control unit 110 is configured to activate and deactivate a training-mode operation of the hearing communication device as a vocal training system. Activation or deactivation may be controlled automatically by the control unit itself, for instance using an internal timer. Activation or deactivation of the training-mode may also be triggered by user input via a vocal command or via another interface, such as a specified operation of a button of the hearing communication device. Activation or deactivation may be remote-controlled via a wireless interface (not shown) of the hearing communication device 100.

In training-mode operation of the vocal training system, an initial training stimulus is provided to the user, for instance based on template-sound information stored in the template memory 104. A vocal training activity performed by the user in response to the initial training stimulus via the microphone 106.2 leads to generation of an electrical training-activity signal that represents the sound detected from the vocal training activity. The training-activity signal is received by the evaluation unit 108. The evaluation unit 108 determines from the training-activity signal at least one error value of at least one error quantity, which is indicative of a difference between the received training-activity signal and the template-sound information. In other words, the at least one error value is a measure of the success of the user in pronouncing a sound, word or phrase in accordance with the template sound information.

The at least one error value is received by the training-control unit 102. The training-control unit 102 uses the error value(s) to generate an adaptive response to the training-activity signal. Particular characteristics of the voice of the user in comparison with a template sound information can be taken into account, for instance by adapting error threshold values that qualitatively or quantitatively determine correct or incorrect pronunciation, or by providing template sound information that is adapted to the characteristics of the user's voice, such as to a pitch of the user's voice. Such adaptation can be done before a first training session by training an adaptable filter. A modified training-stimulus signal that is modified in comparison with the last-generated training-stimulus signal is then generated by the training-control unit. The modification depends on the determined at least one error value. Subsequently, the modified training-stimulus signal is provided to the user-interface unit 106.

The training-control unit 102 controls an iterative performance of the described cycle of generating a training-stimulus signal, receiving a training activity signal and generating a modified training-stimulus signal, until a predefined end-of-training condition is met. For example, the end-of-training condition may be a predefined degree of similarity between the template-sound information stored in the template memory 104 and the detected training-activity signal. Other options are detecting input of a manual, voice or remotely generated command for ending the training.

The vocal training system 100 of Fig. 1 can for instance be used in amending articulation difficulties occurring when learning a spoken language, be it a foreign language or the mother language. It is widely observed that people, and especially adults, who learn foreign languages, rarely acquire an authentic pronunciation. Hearing-impaired persons have even more difficulties in correctly pronouncing the words in their mother language or in a foreign language. Challenges exist in both hearing as well as reproducing the sounds. This is particularly true for the training of foreign languages which are phonetically different from the mother language. Regarding hearing, foreign languages often make use of distictions that do not exist in a mother language. In terms of pronunciation, foreigners tend to produce sounds in a foreign language which are similar to those of their native language. The vocal training system 100 provides an adaptive training that responds to the individual strengths and weaknesses of a user in that the training-control unit generates an adaptive response that depends on a pronunciation error produced in the last training activity by the user.

Real-time operation is preferably enabled by the vocal training system using suitable processor hardware and/or software, in particular for implementing the evaluation and training-control units.

Fig. 2 is a schematic block diagram of another embodiment of a vocal training system 200. The vocal training system 200 has a structure that is generally similar to that of the vocal training system 100 of Fig. 1. In particular, it comprises a training-control unit 202, a template memory 204, a user-interface unit 206, and an evaluation unit 208.

In contrast to the exemplary implementation shown in Fig. 1 in the form of a hearing aid, the vocal training system 200 of Fig. 2 is for use with other user-interface devices, such as those used for input and output to and from any type of a user's computer device, in particular a smart phone, tablet computer, media player etc. As such, the template unit, the training-control unit and the evaluation unit can be provided in the form of a training hardware device that can communicate with the user's computer device via an external interface. In another implementation that is currently preferred, the mentioned units are implemented in the form of an executable software that is installed on the user's computer device.

In particular, the vocal training system 200 has a user interface 206, which comprises headphones or earphones 206.1, a microphone 206.2 separate from the headphones 206.1, and (optionally) a display 206.3. The headphones and the microphone are in an alternative implementation provided in combination in the form of a headset (not shown). The training-control unit 202, in addition to the functionality described for the training-control unit 102 shown in Fig. 1, has an adaptive filter 202.1, which is configured to receive the training-activity signal produced in the user-interface unit 206 upon a vocal training activity by the user detected by the microphone 206.2. The adaptive filter 202.1 further receives the error value from the evaluation unit 208. In dependence on the error value, the training-control unit 202 adapts the filter parameters of the adaptive filter 202.1. To this end, the training-control unit 202 comprises a feedback-control unit 202.2, the adaptive filter 202.1 is configured to filter either the template-sound information or the training-activity signal produced from the last or a previous training activity by the user and provide the filtered training-activity signal as a next acoustical training-stimulus to the user via the headphones 206.1.

In the present embodiment, an additional visual feedback regarding the similarity between the template sound and the vocal training activity by the user is provided via a display 206.3. The feedback information is generated by the training-control unit 202 in the feedback-control unit 202.2.

The visual feedback is in the present exemplary embodiment provided in the form of a graphical display resembling a darts disk. In this graphical representation of feedback, a similarity of the vocal training activity with the template sound is represented by a distance of a spot, which represents a vocal training activity, from a center of a ring pattern. The best result that can be achieved by a perfect match between the template sound information and the vocal training activity is thus a spot that is placed in the center of the ring pattern. Different directions on the display (up/down, left/right) can be used to graphically represent error scales for different aspects of the error determined by the evaluation unit 208. For instance, a difference in pitch can be displayed on a vertical scale and an error in formant frequencies or duration can be displayed along a horizontal scale on the display. Of course, other representations of error or other forms of visual feedback regarding the difference between the vocal training activity and the template sound may be used.

Other implementations that use the same general structure shown in Fig. 2, the vocal training system form a single-purpose training device with dedicated hardware.

Either the headphone 206.1 or the display 206.3 may be omitted as a source of feedback to the user. For instance, in a vocal training system designed especially for deaf users, only a visual source of feedback is provided.

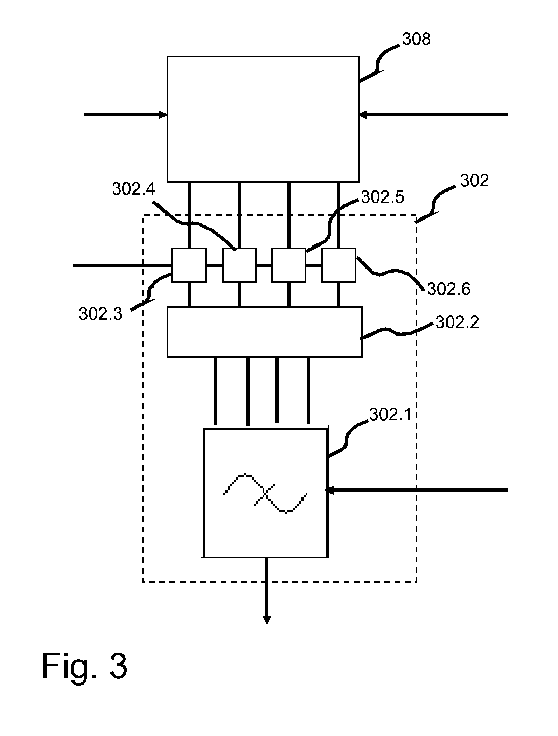

Fig. 3 is a schematic diagram of an evaluation unit and a training-control unit that can be used in the embodiments of Figs. 1 or 2. An evaluation unit 308 receives the training-activity signal from the user-interface unit (not shown) and analyzes specific characteristics of the training-activity signal. In particular, the evaluation unit 308 analyzes aspects of loudness, duration, pitch and formant frequencies in the received training-activity signal and compares them with corresponding values provided in the template-sound information. The individual comparison results regarding the different quantities analyzed are provided as outputs by the evaluation unit 308 and received by the training-control unit 302. The training-control unit 302 uses the received error values for an adaptation of filter parameters of the adaptive filter 302.1. To this end, the training-control unit has a pitch adapter 302.3, an amplitude adapter, a duration adapter 302.5, and a formant-frequency adapter 302.6. The individual adapters provide a modification of the parameters characterizing the training-activity signal that is derived from the vocal training activity by the user. Preferably, the feedback-control unit 302.2 uses the adapted parameters to control the filter parameters of the adaptive filter 302.1. This way, the adaptive response to the vocal training-activity by the user is a modified or perturbed version of the user's vocal training-activity. The pertubation to the user's voice introduced by the adaptive filtering in the training-control unit 302 is in a direction that, in accordance with scientific studies on the learning behavior of users, evokes a response by the user, which will have a closer agreement between the template sound information and the training-activity by the user. The current status of scientific insight is that alterations in auditory feedback have an impact on the speech production by the user. The user modifies his or her speech production in order to compensate for changes imposed on the sound of his/her own voice. Current scientific research also supports the measures taken by the present embodiment by findings showing that speech aspects that are influenced by auditory feedback are the loudness, duration, pitch and formant frequencies. In particular, for formant frequencies, it has been shown that a speaker spontaneously compensates for real-time formant shifts by altering formant production in a manner opposite to the pertubation.

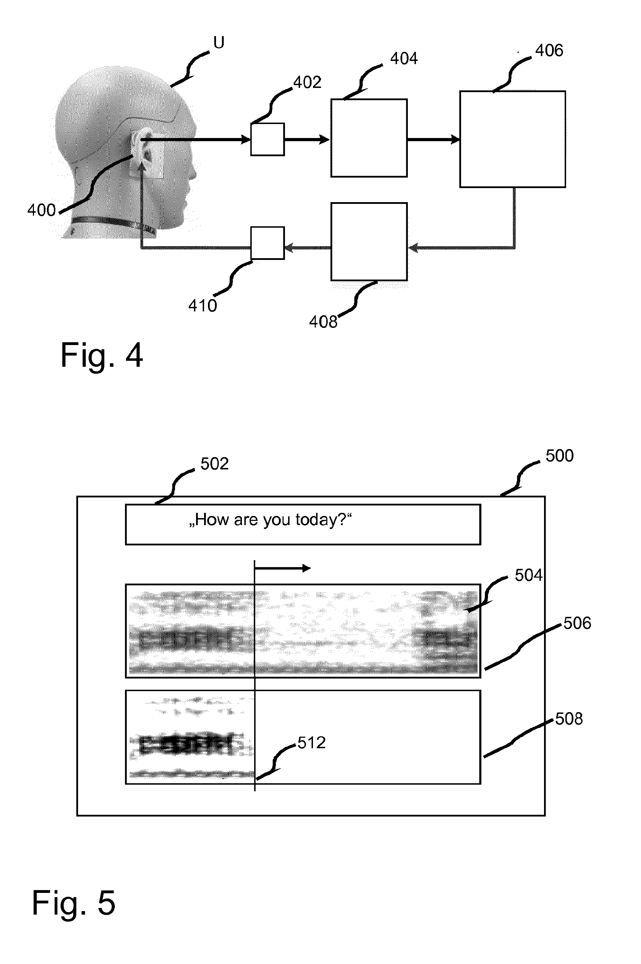

Fig. 4 is a schematic block diagram of another embodiment of a vocal training system. The present embodiment of the vocal training system 400 is implemented in a hearing aid, just like the embodiment of Fig. 1. Similar in functionality to the embodiment of Fig. 3, a vocal training-activity by a user U is received by a microphone (not shown) of the hearing aid 400 and subjected to analog-digital conversion in an A/D converter 402. An evaluation of the digitized training activity signal is in this embodiment performed in two different units, a formant estimation unit 404 and an error estimation unit 406. In the previous embodiments, both units were integrated in the evaluation unit. The output of the error estimation unit 406 is received by an adaptive filter 408 which, in the present embodiment, is configured to modify only the formant frequencies of the vocal training activity produced by the user. The modified training-activity signal is then subjected to digital-analog conversion in a D/A converter 410 and provided to the user's ear via a receiver (not shown) of the hearing aid 400.

The shifting of the formant frequencies in the adaptive filter 408 follows the same principles as outlined above in the context of the description of the embodiment of Fig. 3. In other words, the formant frequencies are shifted to increase the difference between the formant frequencies of the vocal training activity performed by the user and the formant frequencies defined by the template-sound information.

It is noted that the illustration of Fig. 4 is simplified and does not explicitly show some of the units, such as the template memory or the training-control unit, for allowing an easier understanding of the processing principles employed by the vocal training system 400.

Embodiments using a hearing aid may be implemented using a monaural or a binaural hearing aid.

Fig. 5 is an illustration of a display providing visual feedback in a vocal training system according to an embodiment. A visual feedback that produces information about the quality of the user's vocal training activity has proven helpful not only for users which have difficulties in perceiving an auditory feedback due to a strong hearing impairment.

In the present exemplary embodiment of a user-interface unit shown in Fig. 5, the initial training stimulus is provided in a display section 502 of a display 500. Here, a sound, word or phrase to be pronounced by the user is provided in written form. In the present example, the user is prompted to pronounce the phrase "How are you today?". Instead of a stimulus in written form, a symbol or an image representing a word to be pronounced may be used as an initial stimulus. In a second display 504 section of the display 500, a graphical representation of the sound to be pronounced is given to the user. In the present example, the graphical representation of the phrase to be spoken is a spectrogram 504 or a section of a spectrogram of the phrase to be pronounced. The spectrogram 504 which is an illustration of frequency as a function of time in accordance with the template-sound information stored in the template memory of the vocal training system. Other visual representations of the template sound information may be used (e.g. a time dependent display of the currently dominating formant(s)). In a third display section 508, a real-time spectrogram of the current vocal training-activity performed by the user is displayed. Of course, the real-time spectrogram can only show information on those parts of the phrase, which have already been pronounced. A vertical line 512 displays the current position of the frequency analysis in real-time and allows an online comparison between the spectrogram produced by the user's pronunciation of the phrase "How are you today?" and the template pronunciation of this phrase shown in the second display section 504. Coloring may be used to highlight differences. Alternatively or additionally, a written instruction (e.g. 'increase pitch') is generated based e.g. on the differences in spectrograms, and presented in parallel to other illustration(s) of the spoken syllable, word or phrase. In an embodiment, the syllables of 'How are you today' are presented on a time line together with (possibly symbolic, e.g. up or down arrows, indicating pitch changes) instructions for modification (also presented on the time line). In any case, the user thus receives a visual feedback on the difference between the template sound and his own pronunciation. By modifying his/her pronunciation, the user will see to effects on the spectrogram and adapt his training activities so as to achieve a pronunciation that comes closer to the spectrogram of the template sound.

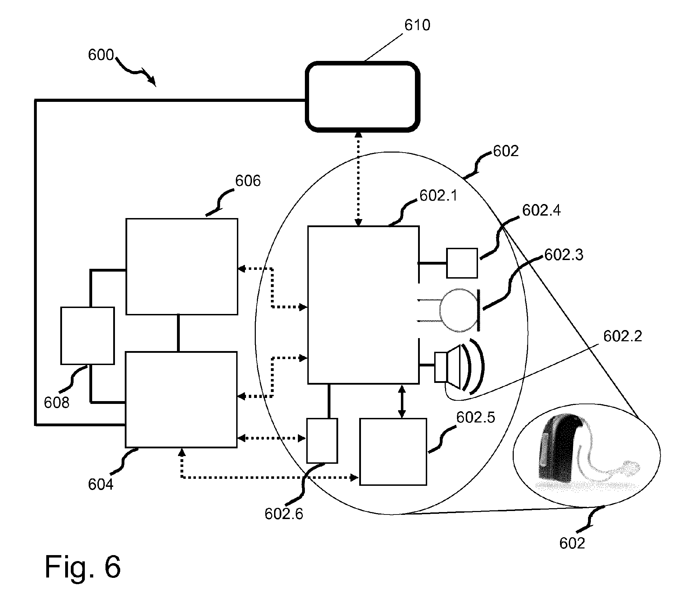

Fig. 6 s a schematic block diagram of a training system 600 with an additional or alternative use-training feature. The training system 600 incorporates use-training functionality for training a user of a hearing communication device in aspects of using the hearing communication device. For simplicity of graphical representation, Fig. 6 does not show the units of a vocal training system discussed in the context of the foregoing embodiments. As the use-training functionality is either additional or alternative to providing a vocal training functionality, the additional units of one of the embodiments of the vocal training systems disclosed herein will have to be added only for those embodiments, which provide both, a vocal-training and a use-training functionality. The subsequent description concentrates on the use-training functionality.

In the present example, the hearing communication device 602 is a hearing aid. However, this is a non-limiting example. Other hearing communication devices, such as a cochlea implant or a bone-anchored hearing instrument may be used in other embodiments.

The hearing aid 602 will be described in the following with reference to the enlarged schematic block diagram forming a simplified representation of the structure of the hearing aid 602. in Fig. 6. A control unit 602.1 is connected with elements of a user-interface unit formed by a receiver 602.2, a microphone 602.3 and a push button 602.4 for allowing a manual input by the user. The control unit 602.1 is connected with a programmable signal processor, typically a digital signal processor 602.5. Furthermore, a monitoring unit 602.6 is connected with the control unit 602.1.

The hearing aid 602 is configured for performing a wireless exchange with an external training device. The signal exchange may take any suitable form, such as a radio link, that for instance employs a Bluetooth, ZigBee or any suitable proprietary protocol. A signal exchange via the wireless link is indicated in Fig. 6 by dotted arrows. Hardware implementing the radio link is well known as such and is therefore not shown explicitly.

The external training device comprises a training-control unit 604, an evaluation unit 606, a memory 608, and a display device 610. The mentioned units may be integrated into a single device, which may for instance be a tablet computer or a smartphone.

In operation of the training system 600, the training-control unit 604 is, in operation of the hearing aid 602 during execution of a use-training program, directed at training the user of the hearing aid 602 in using his hearing aid. To this end, the training-control unit provides an initial training-stimulus signal in the form of an initial use-training-stimulus signal that is directed at stimulating a use-training activity by the user. The initial and further training-stimulus signals are selected from stored training-stimulus signals provided by the memory 608. The memory 608 may provide the training-stimulus signals in the form of training courses that provide consecutive steps in teaching the user certain aspects of use of the hearing aid 602. The evaluation unit 606 receives a use-training activity signal from the hearing aid 602 upon a corresponding use-training activity by the user. The use-training activity may be received by the hearing aid 602 via the microphone 602.3 or via the push button 602.4. The evaluation unit 606 determines at least one error value from the detected use-training activity signal, based on a comparison with at least one pre-stored expected use-training activity signal in the memory 608. Depending on the error value, the training-control unit 604 determines and provides at its output a next use-training stimulus signal to be provided to the user. The next use-training stimulus may, for instance, be provided via the display 610. Another option is to provide the feedback to the user via the receiver 602.2 of the hearing aid 602.

In one variant of this embodiment, the feedback to the user in response to his training activity is restricted to a visual feedback. In another variant, only auditory feedback is provided. In a further variant, which will be described next, the training system provides functionality in training the user of the hearing aid in using a new signal processing algorithm to be executed by the digital signal processor 602.5 in normal operation of the hearing aid 602. The training system is particularly advantageous in one implementation, in which the digital signal processor 602.5 is a programmable signal processor, which is configured to execute at least one adaptable signal processing algorithm implemented in the form of a stored code that is executable by the signal processor. In this embodiment, the training-control unit 604 is preferably configured, in executing the use-training program, to adapt the signal-processing parameters in dependence on use-training activity signals received from the user in response to training stimuli provided in the course of a training program. In such implementation, the training control unit preferably is configured to determine, based on the error value provided by the evaluation unit 606, that the use training has been successful and to indicate to the user via the user-interface unit that he or she is now ready to use the signal-processing algorithm in actual listening situations.

The embodiment of Fig. 6 uses the monitoring unit in the normal-operation mode of the hearing aid 602 to evaluate input signals received via the user interfaces, i.e. via the microphone 602.3, the push button 602.4, or another user interface, such as a touch screen, for detecting a correspondence with predefined input-signal patterns that are associated with pre-stored use-training programs. Such programs may, for instance, be associated with certain listening situations, which may be difficult to master for the user of the hearing aid 602. Upon detecting such a correspondence, the monitoring unit provides a corresponding signal to the training-control unit 604. The training-control unit, in response to receiving such monitor-output signal, provides a suggestion for a use-training via any of the user interfaces in order to suggest that the user starts an identified use-training program immediately or after a delay. Use-training is, in another variant of the present embodiment, started upon detecting a manual input of a user indicative of a desire to perform a use-training program. Here again, a touch screen may be used to provide a menu of available use-training programs.

Due to size constraints hearing devices feature very few buttons, and to accommodate more advanced operation their functions depend on the current state and the duration of the button press. The different functionality in a single physical button complicates the operation instruction to end-users. Furthermore, sitting down with the end-user to monitor how they handle the hearing device and help them improving is time consuming for a hearing care professional.

Hearing devices can communicate with a broad range of computation devices. This allows the computation device to control the hearing device; however it requires that the end-user interacts with the computation device. In practice it is not socially accepted or motivating to operate, say a smartphone or a tablet while engaging in a conversion. In fact, interacting with the hearing device by pushing/holding a button is more discrete and socially acceptable.

However, it requires that the end-user is confident in operating the hearing device. Therefore, the end-user needs to train in operating the device, and become confident in choosing the desired program or feature. Without the training platform, the end-user may ask themselves did I do it right.

Apart from asking the end-user to perform an operation, the monitoring unit can monitor if the end-user operates the hearing device towards the goal. If not it can display what the end-user is doing wrong, e.g. 'Duration of the button press is too short', 'Press up not down'. Additionally, it can change to display the next step once the current step has completed. Moreover, it may also prevent the hearing device from performing changes that do not contribute towards the goal. In other words during training, it eliminates the need for the end-user to correct for operational mistakes.

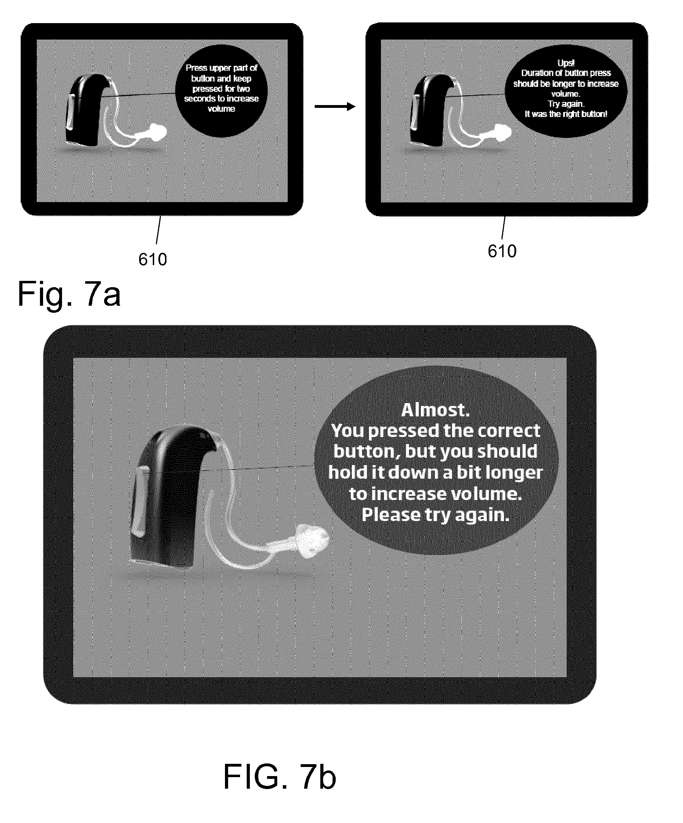

Fig. 7 is an illustrative example of a visual feedback provided during a use-training program performed by the embodiment of Fig. 6. The left screen image of Fig. 7a shows an example of a training stimulus which, in the present example, suggests that the user presses an upper part of the push button 602.4 of the hearing aid for two seconds in order to increase the volume of the receiver 602.2 of the hearing aid 602. In response to an unsuccessful training activity by the user, upon corresponding evaluation by the evaluation unit 606, the training-control unit 604 provides a response via the display 610 that encourages the user to try the same training activity again, using the same button. Fig. 7b shows a further example of a training stimulus provided by a training program. The visual feedback informs the user that he or she has pressed the correct button, but suggests that the user holds down the button a little longer to increase volume.

The training program can be varied over time to gradually introduce more advanced operation, while it also repeats previously learned operations. This allows the hearing-care professional to monitor the end-users progress, and to set goals for the individual end user. It may also change the amount of help that the end-user receives over time. The most intense help prevents the hearing device from changing when the end-user performs an incorrect operation. At a more advanced level with less help, the communication device displays what went wrong, and how to recover from the mistake. At the next level the communication device just displays what went wrong, but leaves it to the end-user to recover. The amount of instructions can also be varied over time, such that the training program display less instructions in later stages of the education program.

The end-user may know that the hearing device is capable of a specific operational mode, but not sure of how that specific operation mode is achieved with the hearing device controls. Here the computation device reads the current mode of operation, and guides the end-user towards the specific operational mode.

In a similar manner, if the end-user is changing the operation of the device from the gateway or from the computation device, the end-user can mark that this change should be added to the training or education program. Saving the "task" allows the end-user to learn this change without operating the hearing device from gateway or computation device at a more convenient time.

Comparing the actions that the end-user performs in the training sessions, allows the training platform to identify steps which are difficult for the end-user to understand and which steps which are difficult to apply. With anonymously logging the training platform can suggest which parts of the instruction and operation that could be improved.

The term 'monitoring unit' may include mobile phones, SmartPhones, smart-watches, Google Glass, tablets, personal computers, laptops, etc.

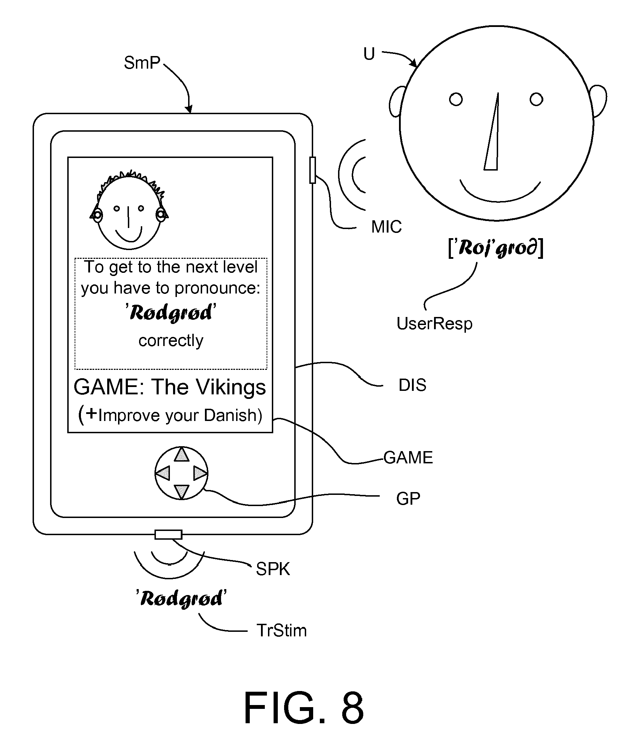

Fig. 8 is a schematic example of an integrated vocal training and gaming system. The system is embodied in a SmartPhone *(SmP).* Comprising a user interface in the form of a loudspeaker (*SPK*) to provide audible training stimuli (*TrStim,* (here the word *Rødgrød*) to the user, a microphone *(MIC)* for picking up the acoustic response (*UserResp*, here the sound ['*Roj'gro∂*]) of the user and a display *(DIS)* to display the game, including the instructions to the user, and possibly the user's acoustic response (and possibly instructions to the user, how to improve any wrong acoustic responses (pronunciations)). The system *(SmP)* further comprises a gamepad *(GP),* possibly forming part of the (possibly touch sensitive) display, allowing a user to interact with the game, by manual cues. The system *(SmP)* is configured to run a game *(GAME,* here the game *The Vikings, +Improve your Danish)* that aims at integrating vocal training and gaming facilities. Preferably, the system can be connected to a network, such as a local network and/or the Internet. Preferably, the system *(SmP)* is configured to allow the game to be played with other users via the network, so that a multitude of users can compete amongst each other in a game that includes (but is not necessarily exclusively based on) language skills, e.g. in closed groups.

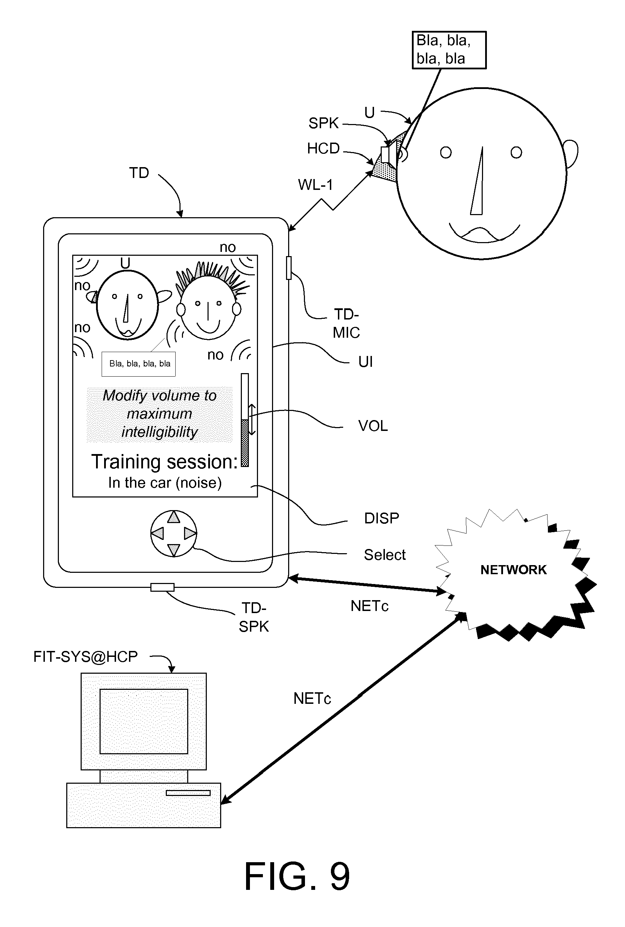

### Example: Using (ear-level) communication devices to deliver training (cf. Fig. 9).

Various studies have demonstrated that it is possible to train the auditory perceptual and cognitive performance of people (children and adults) by carefully designed repetitive and progressive training exercises involving auditory stimuli (listening to and/or responding to). The training is often adaptive (level of difficulty automatically adjusted to the person's performance). For the training to be cost-efficient, time required by the Hearing Care Professional (HCP) must be minimized. Therefore, the training is often available for the user to complete at home. Such training provides a potentially valuable supplement to the provision of hearing communication devices *(HCD* in Fig. 9), e.g. an air conduction Hearing Aid (HA), a Cochlear Implant (CI), or a Bone Anchored Hearing Instrument (BAHI)). Until now, obstacles to success with such training include:
1. Special equipment in the trainee's home (or, alternatively, easily accessible by the trainee) is required.
2. Many forms of training require a training program of many hours' training over several weeks or months.
3. Trainee's compliance to the training program has been shown to be problematic.

These obstacles limit the benefits which can be obtained from auditory perceptual and cognitive training for a HCD user.

An additional problem to be solved relates to the ability of an HCD user to master the functions available in the HCD. It is well-known that HCD users often only retain a minority of the information provided to them by the HCP, including information about how and when to operate non-default modes of their HCD. Such non-default modes are typically implemented in order to provide optimal benefit for the user in distinct classes of listening situation. If the HCD user does not activate the modes appropriately, potential benefits are missed.

In an aspect, a training system is provided. The training system is configured to allow a user (*U*) to execute a training session to train auditory perceptual and cognitive performance. The training system comprises a hearing communication device (*HCD*) and a training device (*TD*)*.* The hearing communication device and the training device each comprise transceiver circuitry allowing a communication link (*WL-1*) to be established between them. The hearing communication device comprises an output unit (*SPK*) for providing output stimuli perceivable as sound to a user (*U*) of the hearing communication device (*HCD*)*.* The hearing communication device is configured to be located at or in an ear, or to be fully or partially implanted in the head, of the user. The training system comprises a user interface (*UI*) allowing the user to interact with the training system. The training system comprises a processing unit for controlling a training session.

In an embodiment, the communication link is configured to allow audio signals and/or control signals to be transmitted from the training device to the hearing communication device. In an embodiment, the user interface forms part of the training device, and includes e.g. a display (e.g. a touch sensitive display) and/or a keyboard. In an embodiment, the user interface is partially implemented as an APP in the training device. In an embodiment, the training device form part of a SmartPhone or other portable computer (e.g. a tablet computer). In an embodiment, the user interface is configured to allow a manual input and/or an acoustic input. In an embodiment, the user interface is configured to allow presentation of information visually and/or acoustically to the user. In an embodiment, the processing unit for controlling a training session form part of the hearing communication device. Alternatively or additionally, the processing unit for controlling a training session may form part of the training device. In an embodiment, the execution of a training session is controlled by software running on the processing unit. In an embodiment, the hearing communication device and/or the training device comprises an interface to a network (*NETWORK*), e.g. a local area network or a switched network, e.g. the Internet. In an embodiment, the hearing communication device and/or the training device is adapted to be connectable to a programming device (*FIT-SYS@HCP*) of a hearing care provider via the interface to the network. In an embodiment, the training system is configured to influence processing parameters ('settings') of the hearing communication device automatically in dependence of predefined criteria relating to results of a training session. In an embodiment, the training system is configured to influence processing parameters of the hearing communication device after consultation of a hearing care provider, e.g. in dependence of predefined criteria relating to results of a training session. In an embodiment, the training system comprises a number of sensors for monitoring properties of the environment (including the acoustic environment) of the user (e.g. temperature, time of day, noise level, reverberation, etc.). In an embodiment, the training system comprises a number of sensors for monitoring a physical (e.g. movement, temperature, heartbeat rate, etc.) or mental state (e.g. cognitive load) of the user. Such sensors may include EEG electrodes (e.g. located on a housing of the hearing communication device) for picking up brain wave signals. Preferably, the training system is configured to influence a training session depending on signals from the sensor(s). In an embodiment, a particular training mode (or a number of training modes) of the hearing communication device (and/or the training device) can be initiated via the user interface. In an embodiment, the hearing communication device comprises functional elements of a hearing instrument, e.g. an input unit (e.g. one or more microphones) for receiving an electric input audio signal or for converting an input sound to an electric input audio signal, an audio processing unit for applying a number of processing algorithms including a frequency dependent gain to the electric input audio signal (e.g. to enhance a target signal and/or to compensate for a user's hearing impairment) and providing a processed output signal, and the output unit for providing output stimuli perceivable as sound to the user of the hearing communication device.

Auditory perceptual or cognitive training may be delivered through the HCD. The training may be controlled by SW in the HCD itself or in an external device such as a Wireless Accessory (WA), e.g. an audio gateway, Remote Control (RC), Personal Computer (PC), a handheld computer, tablet, phone, or Smartphone, hereafter referred to as a training device (TD). Training sessions may be initiated by the trainee at his own convenience or in adherence to a prescribed training regimen, prompted at a distance (e.g., by an HCP), prompted by the SW, or prompted by the HCD. Stimuli for auditory perceptual or cognitive training are delivered through the HCD. The stimulus signal may be generated in the TD (if any), then transmitted (BT, WL, TC etc.) to the HCD, or may be transmitted in parametric form for signal generation in the HCD. The trainee's responses may be registered via user interface on the TD, e.g. pressing buttons, gestures, or voice recognition of trainee response etc. In the embodiment of Fig. 9, the training device (e.g. embodied in or forming part of a SmartPhone, or a remote control device of the hearing communication device) comprises the user interface in the form of a (possibly interactive) display *(DISP),* a keypad or select pad (*Select*), a loudspeaker (*TD-SPK*) and a microphone *(TD-MIC).* The display shows a schematic on-going training session (*Training* session: *In the car (noise)*). The training session simulates a situation, where the user (*U*) drives a car while listening to a passenger speaking (*Bla, bla, bla, bla*) and being exposed to car noise (*no*). The user is encouraged by the training system to indicate an appropriate volume level, e.g. using volume control (*VOL*) on the training device (display), which maximizes speech intelligibility for the user in the current environment. This information (e.g. after several similar training sessions) may be used to modify a volume setting of the hearing communication device, when the user is in similar acoustic environments (e.g. as detected by one or more sensors of the acoustic environment). The modification may be automatically initiated according to a predefined criterion and/or the information may be logged in the hearing communication device and/or the training device for later transfer to a fitting system. Alternatively or additionally, the information may be transmitted to a hearing care provider *HCP* (e.g. to a fitting system *FIT-SYS*@*HCP,* e.g. via network connections *NETc* and a network (*NETWORK*), e.g. the Internet) for evaluation and possible action of the hearing care provider *HCP.*

Data describing the progression of the training may be stored in the TD for later download and viewing during a visit to the HCP's office, uploaded online/periodically from TD to a central registry (HCP and/or data mining entity), and/or processed locally on the TD to determine the progression of the training process (e.g. adaptation of difficulty as the trainees improves their performance).

The HCD might go into a special mode (program) during training sessions, or might remain in a normal mode.

The invention represents a better solution than previously known solutions because:
1. The need for special equipment is reduced or eliminated.
2. The trainee does not have to be in any specific location to follow the training regime.
3. Integration of the training procedure with the general use of the HCD facilitates better acceptance and compliance.
4. The HCD can enhance the training. For example, the HCD can monitor whether the acoustical conditions during the stimulus presentation provide acceptable audibility (e.g. in background noise). The HCD can provide modifying inputs to the procedure or messages to the trainee if this is not the case via HCD or TD.
5. The training results can be fed back to the HCD. For example, the general-use settings of the HCD can be adapted as the training proceeds, to exploit the improved perceptual performance of the user and reinforce the training.
6. The training programme can also incorporate training with new signal processing algorithms. The training outcome can modify the settings of the given signal processing algorithm. An example hereof is the introduction of frequency lowering for children, where the training can prepare the trainee and suggest when the trainee is ready to use the algorithm in actual listening situations.
7. The different auditory situations where the trainee uses the HCD can modify the training programme. For example, if the HCD detects that the trainee is often listening to multiple talkers with similar pitches, the TD increases the amount of pitch training. Likewise situations with spatial separation of talkers can increase the amount of spatial training. Furthermore, this adjustment can be subject to HCP review.
8. The trainee can also identify auditory situations which they would like training to target. The HCD analyses the given situation and incorporates relevant exercises into training programme.
9. The trainee's HCD operation pattern can also modify the training programme, e.g. repeated volume up or volume down may indicate listening problems that require the same analysis as in the case where the trainee identifies a difficult listening situation.
10. The same platform can be used to implement training in mastery of the functions of the HCD, e.g. the TD can periodically give a verbal prompt via the HCD suggesting that the user changes the HCD's mode of operation, and how to do so. The TD can register whether the suggestion was followed, or whether user action was correct or not, provide appropriate feedback, and modify the further course of training as necessary (e.g. when the HCD user no longer makes mistakes, cease prompting). The TD can also store or forward logging data about the training for use by the HCP in subsequent counselling and fine tuning of the HCD's functions.

A further embodiment of the invention uses a Brain Computer Interface (BCI) and analyses the brain response to training-stimuli to measure the performance. E.g. in attention training, the TD informs the listener about the target that the listener should attend to, then the TD presents a number of auditory streams to the wearer, and finally measures if the wearer's attention matches the target.

Furthermore, the BCI allows the HCD to measure the magnitude to which different listening situations impact trainee fatigue, and use this together with the occurrence rate to modify the training programme.

It is noted that the division between elements of the hearing device (here: the hearing aid) and external elements in accordance with the embodiment of Fig. 6 is a concept that can also be applied for forming variants of the embodiments of Figs. 1 to 5. Furthermore, another division between elements of the hearing device and external elements than the one shown in Fig. 6 can be implemented. For instance, the evaluation unit may be an integral part of the hearing device, while the training-control unit and parts of the user-interface unit are external to the hearing device (e.g. in a computer device, such as a remote control device or a SmartPhone). Further, similarly to the concept of the embodiment of Fig. 1, a variant of the use-training system of Fig. 6 is fully integrated into the hearing aid, except for the display. Finally, the system can be fully integrated in a computer device, e.g. a SmartPhone, and e.g. integrated with a game.

## Claims

1. A vocal training system (100, 200, 400, 600) comprising
- a training-control unit (102, 202, 302), an evaluation unit (108, 202, 302) and a user-interface unit (106, 206), wherein
- the training-control unit (102, 202, 302) is configured to generate an initial training-stimulus signal associated with a pre-stored template-sound information,
- the user-interface unit (106, 206) is configured to receive the training-stimulus signal and to generate from the training-stimulus signal and provide to the user at least one training stimulus for vocal training activity by the user;
- the user-interface unit (106, 206) comprises a microphone (106.2 .206.2), which is configured to generate a training-activity signal in the form of an electrical signal representing sound detected from a vocal training activity performed by the user in response to the training stimulus;
- the evaluation unit (108, 208, 308) is configured to determine, from the training-activity signal, at least one error value of at least one error quantity indicative of a difference between the received training-activity signal and the template-sound information, and
- the training-control unit (102, 202, 302) is further configured to receive the at least one error value and to generate an adaptive response to the training-activity signal in the form of a modified training-stimulus signal that is modified in comparison with the last-generated training-stimulus signal in dependence on the at least one error value, to provide the modified training-stimulus signal to the user-interface unit (106, 206).

2. The vocal training system of claim 1, wherein
- the user-interface unit (106, 206) comprises at least one output transducer (106.1, 206.1) and is configured to provide the initial and the modified training-stimulus signals to the user via the at least one output transducer.

3. The training system of claim 1 or 2, wherein
- the user-interface unit (106, 206) comprises a visual display unit (106.3, 206.3) and is configured to provide a visual representation of the initial and the modified training-stimulus signals to the user via the visual display unit.

4. The vocal training system of at least one of the preceding claims, wherein
- the training-control unit (102, 202, 302) is configured to generate the modified training-stimulus signal by applying an adaptive filter (202.1, 302.1, 408) to the last-received training-activity signal, wherein the adaptive filter can be described by a filter function that depends on the at least one error value.

5. The vocal training system of at least one of the preceding claims, wherein the evaluation unit (108, 208, 308) is configured to update the determination of the at least one error value in real time.

6. The vocal training system of at least one of the preceding claims, wherein
- the evaluation unit (108, 208, 308) is configured to determine from the training-activity signal an estimate of at least one of the following quantities: sound pitch, sound amplitude, sound duration, and formant frequencies, and to determine the at least one error value from the at least one determined estimate and from a respective associated template value comprised by the template-sound information, and wherein
- the training-control (102, 202, 302) unit comprises a filter unit (302.1 to 302.6), which is configured to generate the modified training-stimulus signal by modifying the at least one of the determined quantities in comparison with the respective determined estimate.

7. The vocal training system of claim 6, wherein the filter unit (302.1 to 302.6) is configured to modify the at least one of the determined quantities in comparison with the respective determined estimate by determining a filtered value of the quantity that has a larger difference from the respective associated template value than the respective determined estimate.

8. The vocal training system of at least one of the preceding claims, wherein the training-control unit (202) is configured to generate from the at least one determined error value visual-error-representation data suitable for optical presentation to the user via a display (206.3).

9. The vocal training system of claim 8, wherein the training-control unit (202) is configured to generate the visual-error-representation data in the form of a real-time display (506, 508) indicative of the at least one error value as a function of time during an ongoing vocal training activity.

10. The vocal training system of at least one of the preceding claims comprising
- a hearing communication device (100, 400) adapted to be worn in or at an ear of the user.

11. The vocal training system of claim 10, wherein
- an acoustoelectric input transducer of the hearing communication device forms the input transducer (106.2) of the user-interface unit (106).

12. The vocal training system of claim 10 or 11 when dependent on any one of claims 2-9 wherein
- the at least one output transducer comprises an output transducer (106.1) of the hearing communication device.

13. The vocal training system of at least one of claims 10-12, wherin
- the hearing communication device comprises a control unit (110), which is configured to control operation of the hearing device in a normal-operation mode as a hearing communication device and to switch between the normal-operation mode, and a training mode by activating or de-activating the training-control unit.

14. The vocal training system of at least one of the preceding claims comprising
- a computer device comprising one or more of the input transducer (106.2), the at least one output transducer (106.2,) and the visual display unit (106.3, 206.3).

15. The vocal training system of at least one of claims 10-14, wherein the training-control unit (604) is further configured to
- control operation of the hearing communication device (602) and/or the computer device in executing a use-training program directed at training the user in using the hearing communication device,
- determine and provide at its output the initial training-stimulus signal in the form of an initial use-training-stimulus signal for stimulating a use-training activity, which is associated with the initial use-training-stimulus signal and to be performed by the user;
- in response to receiving the training-activity signal in the form of a use-training activity signal, which is indicative of a use-training activity performed by the user, determine the at least one error value from the detected use-training activity signal and at least one pre-stored expected use-training activity signal,
- in dependence on the at least one error value, determine and provide at its output a next use-training-stimulus signal to be provided to the user, and
- wherein the user-interface unit (602.3 to 602.5) is configured to receive the use-training-stimulus signals and to generate and provide to the user corresponding use-training stimuli.

16. The vocal training system of at least one of the preceding claims 10 to 15, wherein the training-control unit (604) and the evaluation unit (606) are implemented in the form of a training-control device, e.g. a computer device, that is external to the hearing device (602), and wherein the hearing device and the training-control device comprise respective communication units for mutual wireless exchange of signals and data, in particular of the training-stimulus signals and the training-activity signals.

17. The vocal training system of claim 16, wherein training-control device comprises a cellular telephone, e.g. a SmartPhone.

18. The vocal training system of at least one of the preceding claims configured to integrate vocal training and gaming facilities, e.g. via a network.
